# EUROPEAN PATENT SPECIFICATION

(11) **EP 2 672 484 B1**
(45) Date of publication and mention of the grant of the patent: **25.12.2019**
(21) Application number: 13170460.3
(22) Date of filing: 04.06.2013
(51) Int. Cl.: G11B 27/10, G11B 27/28, G11B 27/34, H04N 21/431, H04N 21/436, H04N 21/84

(54) **Content management user interface that is pervasive across a user's various devices**
Inhaltsverwaltungsbenutzeroberfläche, die verschiedene Vorrichtungen eines Nutzers durchdringt
Interface utilisateur de gestion de contenu qui est omniprésente dans divers dispositifs d'un utilisateur

(30) Priority: 07.06.2012 US 201213490864
(43) Date of publication of application: 11.12.2013
(73) Proprietor: Sony Corporation, Tokyo 108-0075 (JP)
(72) Inventor: Birnkrant, Marc Steven, Poway, CA California 92064 (US); Lyons, Gary Robert, San Diego, CA California 92127 (US); Winter, Edward Theodore, San Diego, CA California 92131 (US); Crisan, Adrian, San Diego, CA California 92127 (US); Ohren, Christopher Mark, San Diego CA 92127-1898 (US); Knudsen, Arvind, San Diego, CA California 92127 (US); Lawton, Andrew Lee, San Marcos, CA California 92069 (US)
(74) Representative: D Young & Co LLP

(56) References cited:
- EP-A1- 2 166 439
- WO-A2-2011/090287
- US-A1- 2004 230 599
- US-A1- 2006 159 109
- US-A1- 2008 133 697
- US-A1- 2008 240 702
- US-A1- 2009 254 862
- US-A1- 2009 327 241
- US-A1- 2010 070 483
- US-A1- 2011 064 281
- US-A1- 2011 264 648

## Description

### I. FIELD OF THE INVENTION

The present application relates generally to content management user interfaces (Ul) that present a consistent appearance and operation across all of a user's various computerized devices.

### II. BACKGROUND OF THE INVENTION

Computerized device users now accumulate a wide variety of digitized content from many sources. Being able to manage and share such personalized content across multiple devices of the user and with other users in an easy, intuitive way is a desirable but as yet unmet goal.

Documents US2009/254862, EP2166439, and US2008/133697 each describe a user interface displaying thumbnails according to filter selector elements.

### SUMMARY OF THE INVENTION

Accordingly, an electronic device includes a display, a processor controlling the display to present demanded images, and a computer readable storage medium accessible to the processor and bearing instructions which when executed by the processor cause the processor to present on the display a user interface (UI) including plural thumbnail images, each of which is associated with an underlying asset. At least some thumbnail images haves a category icon superimposed thereon. The UI also includes filter selector elements to define which thumbnails appear on the display and which are desired not to appear. The filter selector elements include category selector elements, one of which may be selected to define which thumbnail categories are presented on the display, and content source selector elements, one of which may be selected in addition to a selected category selector element to define which thumbnails may be presented based on a source of the respective underlying asset. In this way, multiple filters may be used to winnow which thumbnails are selected for presentation on the display. In other words, an asset associated with multiple folders is locatable by applying overlapping filters afforded by the category and source selector elements.

In some implementations, the category selector elements include an "all" selector element, which when selected causes all categories to be presented on the UI, subject to source filtering. The category selector elements may also include a "new" selector element which when selected causes only thumbnails representing newly added content to be presented on the display, subject to source filtering. Additionally, the category selector elements can include a "pictures" selector element, which when selected causes only thumbnails representing photographs to be presented on the display, subject to source filtering, and a "video" selector element which when selected causes only thumbnails representing videos to be presented on the display, subject to source filtering. Still further, the category selector elements may include a "music" selector element, which when selected causes only thumbnails representing music assets to be presented on the display, subject to source filtering. If desired, the category selector elements can also include an email and/or document selector element which when selected cause only thumbnails associated with emails and/or documents, respectively, to be presented on the display.

On the other hand, the content source selector elements can include a PC icon which when selected causes only thumbnails associated with content on a PC to be presented in the UI and a phone icon which when selected causes only thumbnails associated with content from a phone to be presented in the UI. The content source selector elements can also include a social networking Internet site icon which when selected causes only thumbnails associated with content on a user's social networking page presented in the UI. Moreover, the content source selector elements may include a video source icon which when selected causes only thumbnails associated with content from a video source to be presented in the UI.

In example embodiments thumbnails representing music assets are overlaid with a music icon and thumbnails representing video assets are overlaid with a video icon. In contrast, thumbnails representing photo assets are not overlaid with a category icon in these examples.

In another aspect, a method includes automatically gathering content assets from a user's devices, and associating metadata with at least some assets to act as tags for filtering purposes. The method also includes generating thumbnails for each asset, presenting the thumbnails in a user interface (UI), and filtering thumbnails from appearing in the UI based on signals received from selector elements of the UI.

In another aspect, an apparatus includes a video display presenting a content management user interface (UI) having a consistent appearance and operation across multiple devices of a user. Thumbnails that represent content that is located on the devices are presented on the UI along with layered filtering operators configured to enable a user to filter the thumbnails by both content source and content type.

The details of the present invention, both as to its structure and operation, can be best understood in reference to the accompanying drawings, in which like reference numerals refer to like parts, and in which:

### BRIEF DESCRIPTION OF THE DRAWINGS

Figure 1 is a block diagram showing an example system according to present principles;
Figures 2-9 are screen shots showing various configurations of the UI; and
Figure 10 is a flow chart of example logic according to present principles.

### DETAILED DESCRIPTION OF THE PREFERRED EMBODIMENT

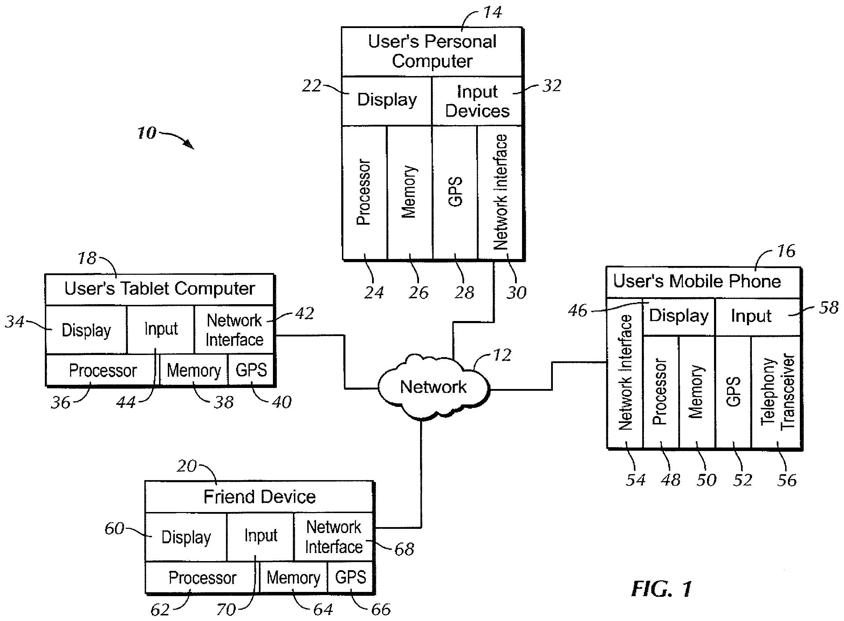

Referring initially to Figure 1, a system 10 is shown in which multiple user devices communicate in a network 12 such as a home network that may be connected to the Internet. In the example shown, the user devices include a personal computer 14, a mobile telephone 16, and a tablet computer 18. Additional devices such as but not limited to TVs, cameras, disk players, game players, and so on may be provided, without limitation. The home network 12 may also communicate with one or more friend computing devices 20, e.g., with the tablet computers, mobile phones, etc. of people who may be friends of the user of the network 12.

In the example shown, the PC 14 includes a display 22 such as a flat panel standard definition (SD) or high definition (HD) display, which may be a touch screen display, and that is controlled by a processor 24 accessing instructions and data on a computer readable storage medium 26 such as disk-based and/or solid state storage and/or memory gates, etc. to undertake present principles. Geographic position information may be input to the processor by a global positioning satellite system (GPS) receiver 28. The processor may communicate with the network 12 using a network interface 30 such as but not limited to a wired or wireless modem, wireless telephony transceiver, and the like. User commands may be received by the processor from one or more input devices 32 such as mice, keyboards or keypads, telephone key pads, remote commanders (RC), voice recognition software coupled to a microphone, etc.

The tablet computer 18 includes a display 34 such as a flat panel standard definition (SD) or high definition (HD) display, which may be a touch screen display, and that is controlled by a processor 36 accessing instructions and data on a computer readable storage medium 38 such as disk-based and/or solid state storage to undertake present principles. Geographic position information may be input to the processor by a GPS receiver 40. The processor may communicate with the network 12 using a network interface 42 such as but not limited to a wired or wireless modem, wireless telephony transceiver, and the like. User commands may be received by the processor from one or more input devices 44 such as mice, keyboards or keypads, telephone key pads, remote commanders (RC), voice recognition software coupled to a microphone, etc.

The mobile phone 16 includes a display 46 such as a flat panel standard definition (SD) or high definition (HD) display, which may be a touch screen display, and that is controlled by a processor 48 accessing instructions and data on a computer readable storage medium 50 such as disk-based and/or solid state storage to undertake present principles. Geographic position information may be input to the processor by a GPS receiver 52 to, e.g., tag pictures taken by the camera with the location, date and time they were taken. The processor may communicate with the network 12 using a network interface 54 such as but not limited to a wired or wireless modem, wireless telephony transceiver 56, and the like. User commands may be received by the processor from one or more input devices 58 such as mice, keyboards or keypads, telephone key pads, remote commanders (RC), voice recognition software coupled to a microphone, etc.

The friend device 20 includes a display 60 such as a flat panel standard definition (SD) or high definition (HD) display, which may be a touch screen display, and that is controlled by a processor 62 accessing instructions and data on a computer readable storage medium 64 such as disk-based and/or solid state storage to undertake present principles. Geographic position information may be input to the processor by a GPS receiver 66. The processor may communicate with the network 12 using a network interface 68 such as but not limited to a wired or wireless modem, wireless telephony transceiver, and the like. User commands may be received by the processor from one or more input devices 70 such as mice, keyboards or keypads, telephone key pads, remote commanders (RC), voice recognition software coupled to a microphone, etc.

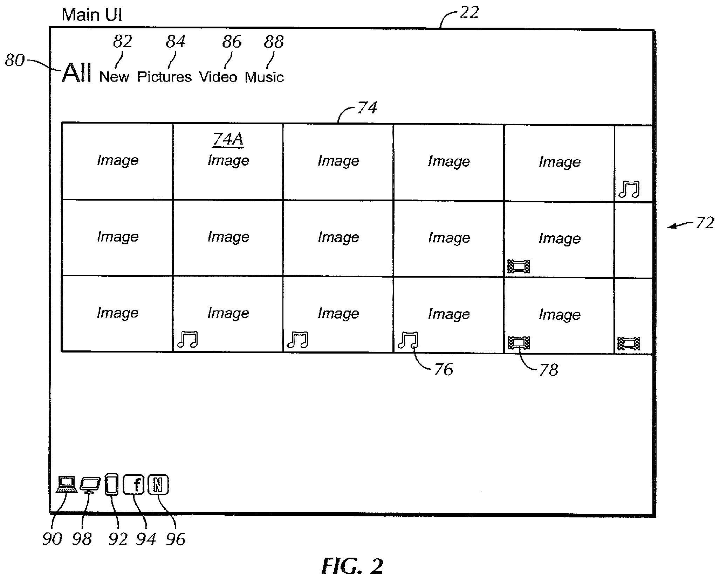

Now turning to Figure 2, a user interface (UI) 72 is shown that may be presented on any of the displays 22, 34, 46, 60 shown in Figure 1. As shown, the UI 72 includes plural thumbnail images 74, each of which when selected causes an underlying asset to be presented on the device. In the example shown, the UI 72 includes three rows of thumbnail images, and a user can cause the images to scroll right and left across the screen by appropriately manipulating the input device, which, recall, may be a touch screen feature of the display 22 itself.

In the example shown, thumbnail images representing music assets may have a music icon 76 superimposed thereon. The music icon 76 may appear as musical notes as shown. In contrast, thumbnail images representing video assets may have a video icon 78 superimposed thereon. The video icon 78 may appear as a piece of video film as shown. The icons 76, 78 may appear in the lower left corner of the associated thumbnails. Thumbnails representing photographs, on the other hand, may bear no category icon, such as the thumbnail 74A. Note that while photos, video, and music are represented in Figure 2, additional categories may also be represented, e.g., email documents, word processing documents, spreadsheet documents, and slide show documents, and these documents likewise may be represented by thumbnails over which are superimposed category icons unique to the particular category to which they pertain.

The UI 72 can also include filter selector elements to define which thumbnails appear on the display and which are desired not to appear. In the example shown, along the upper left border of the display 22 are category selector elements while along the bottom left border of the display 22 are content source selector elements. In this way, multiple filters, e.g., a content filter and a source filter, can be used to winnow which thumbnails are selected for presentation on the display. Stated differently, an asset may be associated with multiple folders and may still be easily located by applying the overlapping filters afforded by the category and source selector elements.

In the specific embodiment shown, the category selector elements include an "all" selector element 80, which when selected causes all categories to be presented on the UI 72, subject to source filtering described below, and a "new" selector element 82 which when selected causes only thumbnails representing newly added content (e.g., within the past week) to be presented, subject to source filtering described below. Also, the category selector elements include a "pictures" selector element 84, which when selected causes only thumbnails representing photographs to be presented, subject to source filtering described below, and a "video" selector element 86 which when selected causes only thumbnails representing videos to be presented, subject to source filtering described below. Further, the category selector elements include a "music" selector element 88, which when selected causes only thumbnails representing music assets to be presented, subject to source filtering described below.

On the other hand, the content source selector elements include a PC icon 90 which when selected causes only thumbnails associated with content on the PC 14 to be presented in the UI 72, subject to any category filtering using the category selector elements discussed above. Similarly, the content source selector elements may include a phone icon 92 which when selected causes only thumbnails associated with content on the phone 16 to be presented in the UI 72 subject to category filtering. Likewise, the content source selector elements may include a social networking Internet site icon 94 which when selected causes only thumbnails associated with content on the user's social networking page (Facebook in the example shown) to be presented in the UI 72 subject to category filtering. Also, the content source selector elements may include a video source icon 96 which when selected causes only thumbnails associated with content from a video source (Netflix in the example shown) to be presented in the UI 72 subject to category filtering. Icons 98 representing other content sources may also be included.

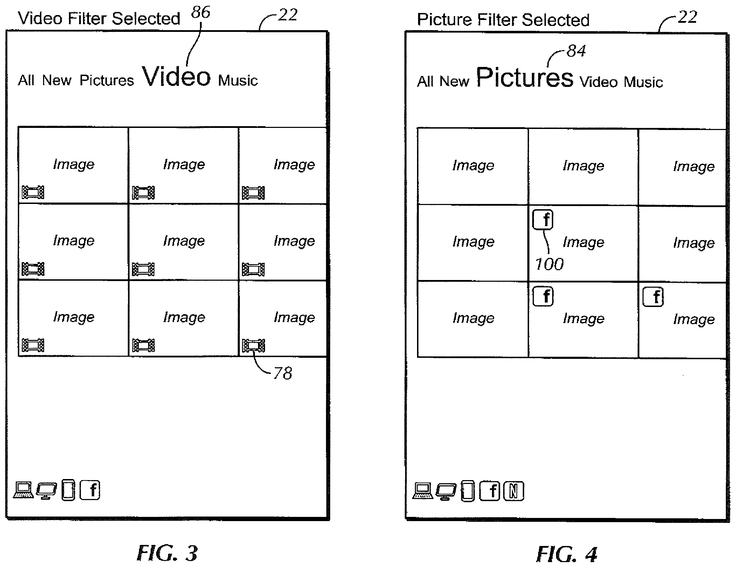

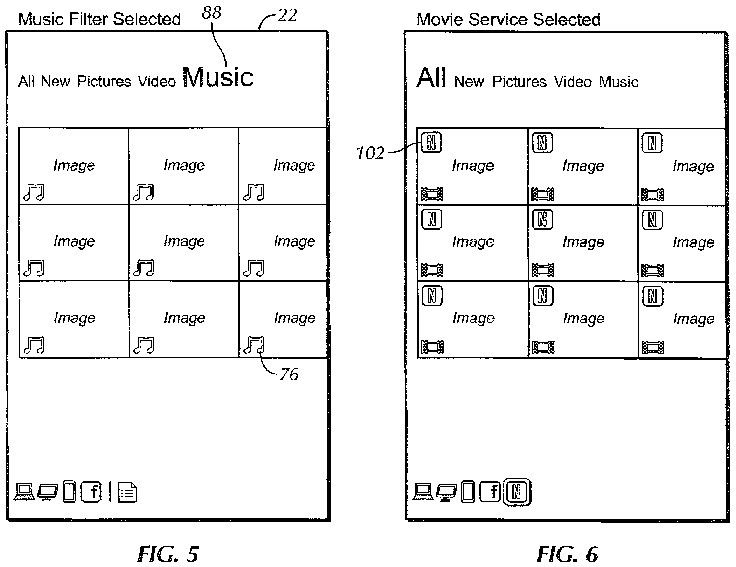

Figures 3-9 illustrate various principles discussed above. In Figure 3, the video category icon 86 has been selected, causing only thumbnails associated with video assets to be presented on the display 22, with the video icon 78 being overlaid on each displayed thumbnail accordingly. In Figure 4, the pictures category icon 84 has been selected, causing only thumbnails associated with photograph assets to be presented on the display 22, with no category icons being overlaid on any of the thumbnails but with a source icon 100 being superimposed on thumbnails representing content from a particular source, in this case, from the user's social networking site page (Facebook, in the example shown). Figure 5 shows that the music category icon 88 has been selected, causing only thumbnails associated with music assets to be presented on the display 22, with the music icon 76 being overlaid on each.

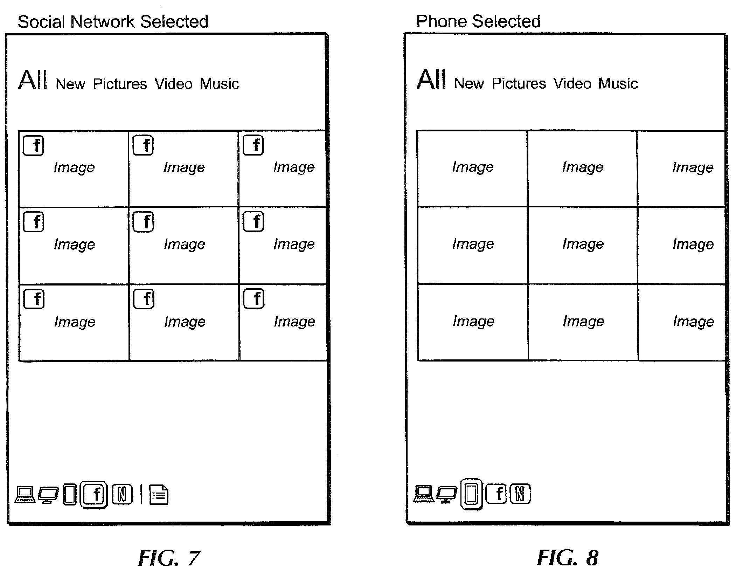

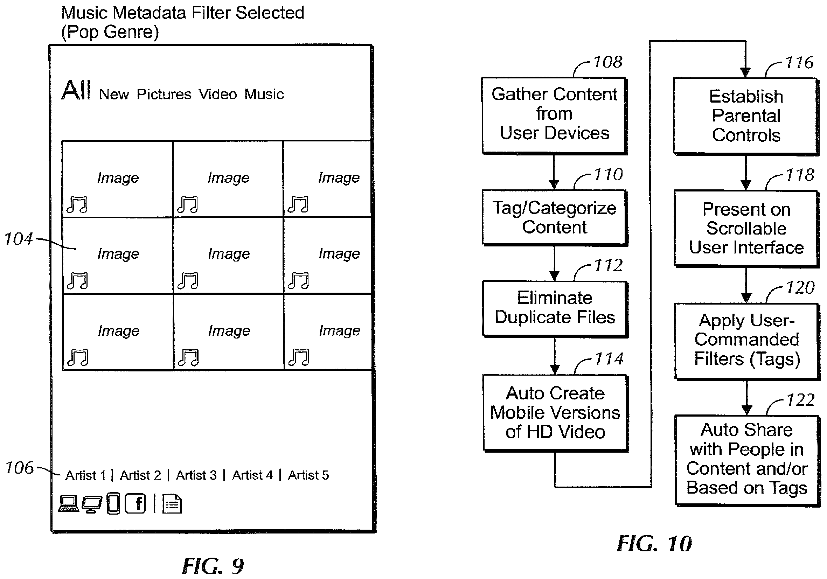

In Figure 6, the "all" category selector element 80 is selected but the video source icon 96 is selected to cause only thumbnails associated with content from a video source (Netflix in the example shown) to be presented in the UI 72. Correspondingly, source icons 102 are superimposed on thumbnails representing content from the selected source, in this case, from Netflix. Figures 7 and 8 illustrate the effects of selecting all content from the social networking site and the mobile phone, respectively in line with the above principles, while Figure 9 illustrates that hovering a cursor over a thumbnail 104 causes metadata 106 associated with the underlying asset to be presented on the UI 72, which metadata may be selected in turn to cause only thumbnails representing assets conforming to the metadata (by, e.g., matching every element of metadata or some predefined subset thereof) to be presented on the UI 72.

Turning now to Figure 10, at block 108 content is gathered from the user's devices and, if permission is granted, from friend devices 20 as well. To do this, digital living network architecture (DLNA) principles may be used in which the user devices 14, 16, 18 discover content on the network 12, including metadata associated with the content. The metadata, which can be appended at block 110 to the assets to act as tags for filtering purposes, can include asset type, asset name, date of access/creation/storage, and folder location. The metadata may also include names of people associated with the asset, e.g., names and addresses of people on photographs, geographic and time information associated with the asset, e.g., geographic location and time a picture was taken as indicated by extended display identification data (EDID) information, etc.

Metadata can also be appended to content manually by the user, e.g., the subject of the asset (Jim's birthday, Mary's graduation, Mozart concert) can be added to metadata to describe the asset. This subject tagging may also be executed automatically. For example, the gathering processor, e.g., the PC processor shown in Figure 1, may access a map application on the Web such as Google Maps to find the names of places near a geographic location indicated by a content generating device's GPS receiver, and if a place name is, for instance, the name of a theater or arena, then access an event database to determine which event was held at that place at the date and time EDID data indicates the asset was generated. If desired, the user may be presented with a prompt asking the user if the discovered place name and event name are correct.

Likewise, facial recognition may be executed on a photograph and then the user's social networking site, and those of his friends, can be accessed to match faces in the photo with faces that may appear on the social networking sites along with names of subjects in the photos. The user may similarly be presented with a prompt asking if a name gleaned next to a matching photo on the social networking site should be added to the metadata of the (matching) photograph being gathered. The same can be executed for video sites which present photos of actors along with their names. Also, content may be automatically gathered by accessing the user's social networking site and video source site and downloading content therefrom.

At block 112 duplicate files are eliminated. Files may be regarded as duplicates of each other if their metadata matches exactly or within a predetermined tolerance, or if image recognition indicates a pixel match exceeding a threshold percentage. If desired, mobile (smaller, SD versions) versions of any HD video assets may be automatically generated at block 114 by, e.g., sending the HD videos through a lower resolution video codec.

Parental controls may be established at block 116 if desired, manually by the user for each asset or automatically by applying rules to image recognition features such as, e.g., bare skin. Thumbnails are then generated for each asset by, e.g., miniaturizing the first frame of a video or an entire photo asset and presented on the scrollable UI 72 at block 118. The thumbnails may be filtered at block 120 using the selector elements described above and matching the selection criteria with the tags that were the subject of block 110. Content may also be automatically shared with friend devices at block 122 by matching recognized faces in the assets with a database of faces and electronic assets gleaned from, e.g., social networking sites as described above and/or manually entered by a user into an address book maintained on a computer readable storage accessible to the executing processor.

While the particular CONTENT MANAGEMENT USER INTERFACE THAT IS PERVASIVE ACROSS A USER'S VARIOUS DEVICES is herein shown and described in detail. it is to be understood that the subject matter which is encompassed by the present invention is limited only by the claims.

## Claims

1. An electronic device, comprising:
a display;
a processor controlling the display; and
a computer readable storage medium accessible to the processor and bearing instructions which when executed by the processor cause the processor
automatically to gather content assets from a user's devices connected to the electronic device via a network;
to associate metadata with at least some of the content assets to act as tags for filtering purposes;
to present on the display a user interface (UI), the UI including
plural thumbnail images, each of which is associated with one of the content assets, at least some thumbnail images having a category icon superimposed thereon, and each of which when selected causes the content asset to be displayed; and
filter selector elements, the filter selector elements causing, when selected, the content assets to be filtered using the metadata tags, in accordance with the selected filter selector elements, wherein the filter selector elements include
category selector elements for selectively defining one category of the content assets for which the plural thumbnail images are presented on the display, and content source selector elements, for selectively defining which one of the user's devices is a source of the respective content assets, the thumbnail images which are presented on the display representing the content assets filtered in accordance with the selected one category and the selected source of the respective content assets.

2. The device of Claim 1, wherein the category selector elements include an "all" selector element, which when selected causes all categories to be presented on the UI, subject to source filtering.

3. The device of Claim 2, wherein the category selector elements include a "new" selector element which when selected causes only thumbnails representing newly added content to be presented on the display, subject to source filtering.

4. The device of Claim 2, wherein the category selector elements include a "pictures" selector element, which when selected causes only thumbnails representing photographs to be presented on the display, subject to source filtering, and a "video" selector element which when selected causes only thumbnails representing videos to be presented on the display, subject to source filtering.

5. The device of Claim 2, wherein the category selector elements include a "music" selector element, which when selected causes only thumbnails representing music assets to be presented on the display, subject to source filtering.

6. The device of Claim 2, wherein the category selector elements include an email and/or document selector element which when selected cause only thumbnails associated with emails and/or documents, respectively, to be presented on the display.

7. The device of Claim 2, wherein the content source selector elements include a PC icon which when selected causes only thumbnails associated with content on a PC to be presented in the UI and a phone icon which when selected causes only thumbnails associated with content from a phone to be presented in the UI.

8. The device of Claim 7, wherein the content source selector elements include a social networking Internet site icon which when selected causes only thumbnails associated with content on a user's social networking page presented in the UI.

9. The device of Claim 7, wherein the content source selector elements include a video source icon which when selected causes only thumbnails associated with content from a video source to be presented in the UI.

10. The device of Claim 1, wherein thumbnails represent at least one of music assets overlaid with a music icon, video assets overlaid with a video icon, or photo assets not overlaid with a category icon.

11. A method of displaying thumbnail images on a user interface (UI) of an electronic device, each of which is associated with one of a plurality of content assets, which are available on a plurality of user devices, the method comprising:
automatically gathering the content assets from the user's devices connected to the electronic device via a network;
associating metadata with at least some of the content assets to act as tags for filtering purposes;
generating thumbnails for each of the plurality of content assets;
presenting on the display of the electronic device the UI, the UI including
plural thumbnail images, each of which is associated with one of the content assets, at least some thumbnail images having a category icon superimposed thereon, and each of which when selected causes the content asset to be displayed; and
filter selector elements, the filter selector elements causing, when selected, the content assets to be filtered using the metadata tags, in accordance with the selected filter selector elements, wherein the filter selector elements include
category selector elements for selectively defining one category of the content assets for which the plural thumbnail images are presented on the display, and content source selector elements, for selectively defining which one of the user's devices is a source of the respective content assets, the thumbnail images which are presented on the display representing the content assets filtered using the metadata tags in accordance with the selected one category and the selected source of the respective content assets.

12. The method of Claim 11, wherein the processor automatically sends content assets to at least one friend device by matching recognized faces in the content assets with a database of faces and one or more other content assets gleaned from Internet sites and/or manually entered by a user into an address book.

13. The method of Claim 11, wherein the metadata includes asset type, asset name, date of access/creation/storage, and folder location of the asset.

14. The method of Claim 11, wherein the processor generates metadata for an asset by accessing a map application on a network to find names of places near a geographic location indicated by a global positioning satellite (GPS) receiver inputting position information accessible to the processor, and responsive to determining a place name therefrom, the processor accesses an event database to determine which event was held at the place name at a time metadata indicates the asset was generated.

## Patentansprüche

1. Elektronische Vorrichtung, umfassend:
eine Anzeige;
einen Prozessor, der die Anzeige steuert; und
ein computerlesbares Speichermedium, auf das der Prozessor zugreifen kann und das Anweisungen trägt, die, wenn sie durch den Prozessor ausgeführt werden, bewirken, dass der Prozessor
automatisch Inhaltsbestände von den Vorrichtungen eines Benutzers erfasst, die über ein Netzwerk mit der elektronischen Vorrichtung verbunden sind;
Metadaten mit mindestens einigen der Inhaltsbestände assoziiert, die als Markierungen für Filterungszwecke fungieren sollen;
auf der Anzeige eine Benutzerschnittstelle (UI) präsentiert, die UI enthaltend
mehrere Miniaturansichtsbilder, von denen jedes mit einem der Inhaltsbestände assoziiert ist, wobei mindestens einige Miniaturansichtsbilder ein ihnen überlagertes Kategoriesymbol aufweisen und wobei jedes davon, wenn es ausgewählt wird, bewirkt, dass der Inhaltsbestand angezeigt wird; und
Filterauswahlelemente, wobei die Filterauswahlelemente, wenn sie ausgewählt werden, bewirken, dass die Inhaltsbestände unter Verwendung der Metadatenmarkierungen gemäß den ausgewählten Filterauswahlelementen gefiltert werden, wobei die Filterauswahlelemente enthalten
Kategorieauswahlelemente zum selektiven Definieren einer Kategorie der Inhaltsbestände, für die die mehreren Miniaturansichtsbilder auf der Anzeige präsentiert werden, und
Inhaltsquellenauswahlelemente zum selektiven Definieren, welche eine der Vorrichtungen des Benutzers eine Quelle der jeweiligen Inhaltsbestände ist, wobei die Miniaturansichtsbilder, die auf der Anzeige präsentiert werden, die gemäß der ausgewählten einen Kategorie und der ausgewählten Quelle der jeweiligen Inhaltsbestände gefilterten Inhaltsbestände repräsentieren.

2. Vorrichtung nach Anspruch 1, wobei die Kategorieauswahlelemente ein Auswahlelement "alle" enthalten, das, wenn es ausgewählt wird, bewirkt, dass alle Kategorien auf der UE präsentiert werden, vorbehaltlich der Quellenfilterung.

3. Vorrichtung nach Anspruch 2, wobei die Kategorieauswahlelemente ein Auswahlelement "neu" enthalten, das, wenn es ausgewählt wird, bewirkt, dass nur Miniaturansichten auf der Anzeige präsentiert werden, die neu hinzugefügten Inhalt repräsentieren, vorbehaltlich der Quellenfilterung.

4. Vorrichtung nach Anspruch 2, wobei die Kategorieauswahlelemente ein Auswahlelement "Bilder" enthalten, das, wenn es ausgewählt wird, bewirkt, dass nur Miniaturansichten, die Fotografien repräsentieren, auf der Anzeige präsentiert werden, vorbehaltlich der Quellenfilterung, und ein Auswahlelement "Video", das, wenn es ausgewählt wird, bewirkt, dass nur Miniaturansichten auf der Anzeige präsentiert werden, die Videos repräsentieren, vorbehaltlich der Quellenfilterung.

5. Vorrichtung nach Anspruch 2, wobei die Kategorieauswahlelemente ein Auswahlelement "Musik" enthalten, das, wenn es ausgewählt wird, bewirkt, dass nur Miniaturansichten auf der Anzeige präsentiert werden, die Musik repräsentieren, vorbehaltlich der Quellenfilterung.

6. Vorrichtung nach Anspruch 2, wobei die Kategorieauswahlelemente ein E-Mail- und/oder Dokumenten-Auswahlelement enthalten, das, wenn es ausgewählt wird, bewirkt, dass nur Miniaturansichten auf der Anzeige präsentiert werden, die jeweils mit EMails und/oder Dokumenten assoziiert sind.

7. Vorrichtung nach Anspruch 2, wobei die Inhaltsquellenauswahlelemente ein PC-Symbol enthalten, das, wenn es ausgewählt wird, bewirkt, dass nur Miniaturansichten auf der UI präsentiert werden, die mit Inhalt in einem PC assoziiert sind, und ein Telefon-Symbol enthalten, das, wenn es ausgewählt wird, bewirkt, dass nur Miniaturansichten auf der UI präsentiert werden, die mit Inhalt von einem Telefon assoziiert sind.

8. Vorrichtung nach Anspruch 7, wobei die Inhaltsquellenauswahlelemente ein Symbol für einen Internetstandort der sozialen Vernetzung enthalten, das, wenn es ausgewählt wird, bewirkt, dass nur Miniaturansichten auf der UI präsentiert werden, die mit Inhalt auf einer Seite für soziale Vernetzung eines Benutzers assoziiert sind.

9. Vorrichtung nach Anspruch 7, wobei die Inhaltsquellenauswahlelemente ein Videoquellen-Symbol enthalten, das, wenn es ausgewählt wird, bewirkt, dass nur Miniaturansichten auf der UI präsentiert werden, die mit Inhalt von einer Videoquelle assoziiert sind.

10. Vorrichtung nach Anspruch 1, wobei Miniaturansichten mindestens eines von mit einem Musik-Symbol überlagerten Musikbeständen, mit einem Video-Symbol überlagert Videobeständen oder nicht mit einem Kategorie-Symbol überlagerten Fotobeständen repräsentieren.

11. Verfahren zum Anzeigen von Miniaturansichtsbildern auf einer Benutzerschnittstelle (UI) einer elektronischen Vorrichtung, von denen jedes mit einem einer Vielzahl von Inhaltsbeständen, die auf einer Vielzahl von Benutzervorrichtungen verfügbar sind, assoziiert ist, das Vorrichtung umfassend:
automatisches Erfassen der Inhaltsbestände von den Vorrichtungen eines Benutzers, die über ein Netzwerk mit der elektronischen Vorrichtung verbunden sind;
Assoziieren von Metadaten mit mindestens einigen der Inhaltsbestände, die als Markierungen für Filterungszwecke fungieren sollen;
Erzeugen von Miniaturansichten für jeden der Vielzahl von Inhaltsbeständen;
Präsentieren der UI auf der Anzeige der elektronischen Vorrichtung, die UI enthaltend
mehrere Miniaturansichtsbilder, von denen jedes mit einem der Inhaltsbestände assoziiert ist, wobei mindestens einige Miniaturansichtsbilder ein ihnen überlagertes Kategoriesymbol aufweisen und wobei jedes davon, wenn es ausgewählt wird, bewirkt, dass der Inhaltsbestand angezeigt wird; und
Filterauswahlelemente, wobei die Filterauswahlelemente, wenn sie ausgewählt werden, bewirken, dass die Inhaltsbestände unter Verwendung der Metadatenmarkierungen gemäß den ausgewählten Filterauswahlelementen gefiltert werden, wobei die Filterauswahlelemente enthalten
Kategorieauswahlelemente zum selektiven Definieren einer Kategorie der Inhaltsbestände, für die die mehreren Miniaturansichtsbilder auf der Anzeige präsentiert werden, und
Inhaltsquellenauswahlelemente zum selektiven Definieren, welche eine der Vorrichtungen des Benutzers eine Quelle der jeweiligen Inhaltsbestände ist, wobei die Miniaturansichtsbilder, die auf der Anzeige präsentiert werden, die gemäß der ausgewählten einen Kategorie und der ausgewählten Quelle der jeweiligen Inhaltsbestände unter Verwendung der Metadatenmarkierungen gefilterten Inhaltsbestände repräsentieren.

12. Verfahren nach Anspruch 11, wobei der Prozessor automatisch Inhaltsbestände an mindestens eine Freundvorrichtung durch Abgleichen erkannter Gesichter in den Inhaltsbeständen mit einer Datenbank von Gesichtern und einem oder mehreren Inhaltsbeständen, von Internetstandorten zusammengetragen und/oder durch einen Benutzer manuell in ein Adressbuch eingegeben, sendet.

13. Verfahren nach Anspruch 11, wobei die Metadaten einen Bestandstyp, eine Bestandsbezeichnung, ein Datum des Zugriffs/der Erstellung/der Speicherung und einen Ordnerstandort des Bestands enthalten.

14. Verfahren nach Anspruch 11, wobei der Prozessor Metadaten für einen Bestand durch Zugreifen auf eine Kartenanwendung in einem Netzwerk erzeugt, um Namen von Orten nahe einem geografischen Standort zu finden, angegeben durch einen Empfänger eines globalen Positionierungssatelliten (GPS), der Positionsinformationen eingibt, auf die der Prozessor zugreifen kann, und wobei der Prozessor als Reaktion auf Bestimmen einer Ortsbezeichnung daraus auf eine Ereignisdatenbank zugreift, um zu bestimmen, welches Ereignis an der Ortsbezeichnung zu einer Zeit, von der Metadaten angeben, dass der Bestand dann erzeugt wurde, abgehalten wurde.

## Revendications

1. Dispositif électronique, comprenant :
un afficheur ;
un processeur commandant l'afficheur ; et
un support de mémorisation lisible par ordinateur accessible par le processeur et portant des instructions qui, à leur exécution par le processeur, amènent le processeur à
collecter automatiquement des actifs de contenu auprès de dispositifs d'un utilisateur connectés au dispositif électronique par l'intermédiaire d'un réseau ;
associer des métadonnées à au moins certains des actifs de contenu pour servir de balises à des fins de filtrage ;
présenter sur l'afficheur une interface utilisateur (UI), l'UI comportant
plusieurs images de vignettes, qui sont chacune associées à un des actifs de contenu, aux moins certaines images de vignettes présentant une icône de catégorie superposée sur elles, et chacune, à sa sélection, entraînant l'affichage de l'actif de contenu ; et
des éléments de sélection de filtre, les éléments de sélection de filtre, à leur sélection, entraînant le filtrage des actifs de contenu à filtrer à l'aide des balises de métadonnées, conformément aux éléments de sélection de filtre sélectionnés, les éléments de sélection de filtre comportant
des éléments de sélection de catégorie pour définir sélectivement une catégorie des actifs de contenu pour lesquels les plusieurs images de vignettes sont présentées sur l'afficheur, et
des éléments de sélection de source de contenu, pour définir sélectivement le dispositif d'utilisateur qui sert de source aux actifs de contenu respectifs, les images de vignettes qui sont présentées sur l'afficheur représentant les actifs de contenu filtrés conformément à la catégorie sélectionnée et à la source sélectionnée des actifs de contenu respectif.

2. Dispositif selon la revendication 1, dans lequel les éléments de sélection de catégorie comportent un élément de sélection "toutes" qui, à sa sélection, entraîne la présentation de toutes les catégories sur l'UI, sous réserve du filtrage source.

3. Dispositif selon la revendication 2, dans lequel les éléments de sélection de catégorie comportent un élément de sélection "nouveau" qui, à sa sélection, entraîne la présentation sur l'afficheur uniquement des vignettes représentant un contenu nouvellement ajouté, sous réserve du filtrage source.

4. Dispositif selon la revendication 2, dans lequel les éléments de sélection de catégorie comportent un élément de sélection "images" qui, à sa sélection, entraîne la présentation sur l'afficheur uniquement des vignettes représentant des photographies, sous réserve du filtrage source, et un élément de sélection "vidéo" qui, à sa sélection, entraîne la présentation sur l'afficheur uniquement des vignettes représentant des vidéos, sous réserve du filtrage source.

5. Dispositif selon la revendication 2, dans lequel les éléments de sélection de catégorie comportent un élément de sélection "musique" qui, à sa sélection, entraîne la présentation sur l'afficheur uniquement des vignettes représentant des actifs de musique, sous réserve du filtrage source.

6. Dispositif selon la revendication 2, dans lequel les éléments de sélection de catégorie comportent un élément de sélection de courriel et/ou de document qui, à sa sélection, entraîne la présentation sur l'afficheur uniquement des vignettes associées à des courriels et/ou documents, respectivement.

7. Dispositif selon la revendication 2, dans lequel les éléments de sélection de source de contenu comportent une icône de PC qui, à sa sélection, entraîne la présentation dans l'UI uniquement des vignettes associées à un contenu sur un PC et une icône de téléphone qui, à sa sélection, entraîne la présentation sur l'UI uniquement des vignettes associées à un contenu provenant d'un téléphone.

8. Dispositif selon la revendication 7, dans lequel les éléments de sélection de source de contenu comportent une icône de site Internet de réseaux sociaux qui, à sa sélection, entraîne la présentation dans l'UI uniquement des vignettes associées à un contenu sur une page de réseau social d'un utilisateur.

9. Dispositif selon la revendication 7, dans lequel les éléments de sélection de source de contenu comportent une icône de source vidéo qui, à sa sélection, entraîne la présentation dans l'UI uniquement des vignettes associées à un contenu provenant d'une source vidéo.

10. Dispositif selon la revendication 1, dans lequel les vignettes représentent au moins un d'actifs de musique recouverts par une icône de musique, d'actifs vidéo recouverts par une icône vidéo, ou d'actifs de photographies non recouverts par une icône de catégorie.

11. Procédé d'affichage d'images de vignettes sur une interface utilisateur (UDI) d'un dispositif électronique, lesquelles sont chacune associées à un d'une pluralité d'actifs de contenu, lesquels sont disponibles sur une pluralité de dispositifs d'utilisateur, le procédé comprenant:
la collecte automatique des actifs de contenu auprès de dispositifs d'un utilisateur connectés au dispositif électronique par l'intermédiaire d'un réseau ;
l'association de métadonnées à au moins certains des actifs de contenu pour servir de balises à des fins de filtrage ;
la génération de vignettes pour chacun de la pluralité d'actifs de contenu ;
la présentation sur l'afficheur du dispositif électronique de l'UI, l'UI comportant
plusieurs images de vignettes, lesquelles sont chacune associées à un des actifs de contenu, aux moins certaines images de vignettes ayant une icône de catégorie superposée sur elles, et chacune d'elles, à sa sélection, entraînant l'affichage de l'actif de contenu ; et
des éléments de sélection de filtre, les éléments de sélection de filtre, à leur sélection, entraînant le filtrage des actifs de contenu à l'aide des balises de métadonnées, conformément aux éléments de sélection de filtre sélectionnés, les éléments de sélection de filtre comportant
des éléments de sélection de catégorie pour définir sélectivement une catégorie des actifs de contenu pour lesquels les plusieurs images de vignettes sont présentées sur l'afficheur, et
des éléments de sélection de source de contenu, pour définir sélectivement le dispositif d'utilisateur qui sert de source aux actifs de contenu respectifs, les images de vignettes qui sont présentées sur l'afficheur représentant les actifs de contenu filtrés conformément à la catégorie sélectionnée et à la source sélectionnée des actifs de contenu respectifs.

12. Procédé selon la revendication 11, dans lequel le processeur envoie automatiquement des actifs de contenu à au moins un dispositif ami en comparant des visages reconnus dans les actifs de contenu à une base de données de visages et un ou plusieurs autres actifs de contenu acquis auprès de sites Internet et/ou saisis manuellement par un utilisateur dans un carnet d'adresses.

13. Procédé selon la revendication 11, dans lequel les métadonnées comportent un type d'actifs, un nom d'actif, un date d'accès/création/mémorisation, et un emplacement de dossier de l'actif.

14. Procédé selon la revendication 11, dans lequel le processeur génère des métadonnées pour un actif en accédant à une application de carte sur un réseau pour trouver des noms de lieux près d'un emplacement géographique indiqué par un récepteur de satellites de positionnement mondial (GPS) en entrant des informations de position accessibles par le processeur, et en réponse à la détermination d'un nom de lieu, le processeur sollicite une base de données d'événements pour déterminer l'événement qui s'est tenu au lieu nommé à un temps auquel les métadonnées indiquent que l'actif a été généré.
